# EUROPÄISCHE PATENTSCHRIFT

(11) **EP 0 313 917 B1**
(45) Veröffentlichungstag und Bekanntmachung des Hinweises auf die Patenterteilung: **08.06.1994**
(21) Anmeldenummer: 88116884.3
(22) Anmeldetag: 12.10.1988
(51) Int. Cl.: C08L 21/00, C08K 3/06, C08K 3/22

(54) **Vulkanisierbare Kautschukmassen**
Vulcanisable rubber compound
Composition de caoutchouc vulcanisable

(30) Priorität: 24.10.1987 DE 3736090; 02.06.1988 DE 3818772
(43) Veröffentlichungstag der Anmeldung: 03.05.1989
(73) Patentinhaber: BAYER AG, 51368 Leverkusen (DE)
(72) Erfinder: Obrecht, Werner, D-4130 Moers 2 (DE); Szentivanyi, Zsolt, D-5090 Leverkusen 1 (DE)

(56) Entgegenhaltungen:
- EP-A- 0 264 506
- DE-A- 1 470 861
- FR-A- 2 511 015

## Beschreibung

Die Erfindung betrifft vulkanisierbare Kautschukmassen, die frei von Carboxylgruppen sind und neben Schwefel und/oder Schwefelspendern noch Peroxid mindestens eines Metalls aus den Gruppen Ia, Ib, IIa und IIb des Periodensystems der Elemente enthalten, sowie deren Verwendung zur Herstellung von Vulkanisaten.

Als Vulkanisationsbeschleuniger werden bekanntlich Substanzen bezeichnet, die die Vulkanisationszeit verkürzen oder eine Vulkanisation bei niedrigerer Temperatur ermöglichen; vgl. Ullmanns Encyklopädie der technischen Chemie, 3. Aufl., Urban & Schwarzenberg, München-Berlin 1957, S. 383 ff. Zur Entfaltung der vollen Wirksamkeit der Vulkanisationsbeschleuniger werden organische oder vorzugsweise anorganische Aktivatoren mitverwendet. Die bedeutendsten anorganischen Aktivatoren sind die Metalloxide, insbesondere Zinkoxid. In einzelnen Fällen wird auch Magnesiumoxid oder Calciumhydroxid verwendet.

Überraschenderweise wurde nun gefunden, daß - gegebenenfalls unter teilweisem oder vollständigem Verzicht auf die obengenannten Aktivatoren - durch Zusatz bestimmter Peroxide Kautschukmassen zugänglich werden, die bei der Vulkanisation mit Schwefel und/oder Schwefelspendern zu Produkten mit verbessertem Druckverformungsrest (Compression Set), höherer Dichtungsbeständigkeit und geringerer Wärmebildung im Dauerschwingversuch (Flexometer) führen.

Aus der US PS 3 403 136 ist die Verwendung von Zinkperoxid als Aktivator für als Vulkanisationsmittel eingesetzten Schwefel bekannt; das Schwefel/Peroxid-System wird jedoch ausschließlich für Kautschuke mit 1 - 40 % Carboxylgruppen empfohlen. Daher war ein Vorteil dieses System bei Carboxylgruppen-freien Kautschuken nicht zu erwarten.

Die europäische Patentanmeldung 0 264 506 befaßt sich mit der Herstellung von Reifen, die die Luft möglichst langsam verlieren sollen, wenn der Reifen von einem spitzen Gegenstand durchbohrt wird. Dies wird durch eine besondere Ausstattung des Innleiners erreicht. Es ist dabei wichtig, daß eine Schicht des Innleiners so fließfähig ist, daß die Undichtigkeit verschlossen werden kann. Man erreicht dies durch die Zugabe von Zinkperoxid zu dem Butylkautschuk, der dadurch bei der Vulkanisation abgebaut wird.

Gegenstand der Erfindung sind vulkanisierbare Kautschukmassen, die frei von Carboxylgruppen sind und Polychloroprene, EPDM, Ethylen/Vinylacetat-Copolymerisate sowie deren partielle Hydrierprodukte umfassen, die dadurch gekennzeichnet sind, daß man die genannten Kautschuke mit Zusätzen mischt, die neben Schwefel und/oder Schwefelspendern 0,1 bis 20 Gew.-% Peroxid mindestens eines Metalls aus den Gruppen Ia, Ib, IIa, IIb des Periodensystems der Elemente enthalten.

Weiterer Gegenstand der Erfindung ist die Verwendung der Kautschukmassen zur Herstellung von Vulkanisaten.

Die Kautschuke besitzen vorzugsweise Glasübergangstemperaturen unter 0°C, insbesondere unter -25°C.

Der Ausdruck "EPDM" steht für Ethylen/Propylen/Dien-Ter-polymerisate. EPDMs umfassen Kautschuke, in denen das Gewichtsverhältnis von Ethylen- zu Propylenresten im Bereich von 40:60 bis 65:35 liegt und die 1 bis 20 C=C-Doppelbindungen/1.000 C-Atome aufweisen können. Als geeignete Dien-Monomere im EPDM seien beispielsweise genannt: konjugierte Diene, z.B. Isopren und Butadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Für die erfindungsgemäße Massen besonders bevorzugte Kautschuke sind (partiell) hydrierte Nitrilkautschuke. "Partiell hydriert" bedeutet in diesem Zusammenhang, daß 90 bis 98,5, vorzugsweise 95 bis 98 % der hydrierbaren C=C-Doppelbindungen (d.h. in der Regel der vom Butadien stammenden Einheiten) hydriert sind. Der Hydriergrad kann IR-spektroskopisch bestimmt werden.

Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503. Hydrierter Nitrilkautschuk zeichnet sich vor allem durch vergleichsweise hohe Stabilität gegen Oxidation aus.

Die für die erfindungsgemäße Massen geeigneten Kautschuke besitzen in der Regel Mooney-Viskositäten (DIN 53 523, ML 1+4) von 10 bis 150, vorzugsweise von 25 bis 80 ME.

Für die erfindungsgemäße Produkte bevorzugte Peroxide sind Natriumperoxid, Bariumperoxid, insbesondere Zinkperoxid.

Den Kautschuken setzt man vor der Vulkanisation Vulkanisationshilfsmittel und - je nach Bedarf - Füllstoffe, wie z.B. Ruß, Weichmacher, Alterungsschutzmittel und/oder Verarbeitungshilfsmittel in üblichen Mengen zu.

Die Vulkanisation mit Hilfe von Schwefel oder Schwefelspendern kann nach üblichen Methoden erfolgen. Als Vulkanisationsmittel verwendet man in der Regel 0,2 bis 3,0 Gew.-% Schwefel (im Falle von Schwefelspender berechnet als freiwerdender Schwefel), bezogen auf Kautschuk.

Als Vulkanisationsmittel werden vorzugsweise keine Verbindungen mitverwendet, die nur in Gegenwart von Oxidationsmittel als Vulkanisationsmittel wirksam sind wie z.B. 1,3,5-Trinitrobenzol, m-Dinitrobenzol, Chinone, deren Halogenderivate, Chinonmono- und -diimine, p-Chinonmono- und -dioxim.

Die erfindungsgemäß erhältlichen Vulkanisate sind hervorragende Materialien für Treib- bzw. Zahnriemen, bei denen ihr hohes Rückstellvermögen zur Geltung kommt. Außerdem zeigen sie als Dichtungsmaterialien jeglicher Art ausgezeichnete Eigenschaften.

Die in den nachfolgenden Beispielen genannten Teile sind Gewichtsteile, Prozentangaben beziehen sich auf das Gewicht.

### Beispiele

| Beispiel 1 | |
|---|---|
| | [Teile] |
| HNBR¹⁾ | 100 |
| Weichmacher (aromatischer Polyether) | 5 |
| Ruß N 774 | 65 |
| Stearinsäure | 1 |
| Octyliertes Diphenylamin | 1,5 |
| Zinksalz des Mercaptobenzimidazols | 2 |
| Etherthioether (Weichmacher) | 5 |
| | 1̅7̅9̅,̅5̅ |

| | |
|---|---|
| 1) Hydriertes Acrylnitril/Butadien-Copolymerisat mit einem Acrylnitrilgehalt von 34 %, einem Hydrierungsgrad von 96 %, bezogen auf C=C-Doppelbindungen, und einer Mooney-Viskosität (ML 1+4) von 70 ME | |

Die obengenannten Komponenten wurden auf einem Kneter gemischt (= Batch I).

| | A | B |
|---|---|---|
| Batch I | 179,5 | 179,5 |
| Schwefel | 0,2 | 0,2 |
| Zinkoxid | 5 | - |
| Zinkperoxid | - | 5 |
| TMTD²⁾ | 1,4 | 1,4 |
| TETD³⁾ (75 %ig in EVA) | 2,25 | 2,25 |
| Dithiodicaprolactam (80 %ig in EVA) | 2,2 | 2,2 |
| Mooney (ML 1+4) | 105 ME | 100 ME |

| | | |
|---|---|---|
| 2) Tetramethylthiuramdisulfid | | |
| 3) Tetraethylthiuramdisulfid | | |

Man vulkanisierte 15 Minuten bei 170°C. Der Druckverformungsrest nach 70 Stunden/100°C betrug 74 % (A) und 59 % (B).

| Beispiel 2 | | | | |
|---|---|---|---|---|
| | C | D | E | F |
| | **[Teile]** | | | |
| Batch I | 179,5 | 179,5 | 179,5 | 179,5 |
| Schwefel | 0,5 | 0,5 | 0,5 | 0,5 |
| Zinkoxid | 5 | 1,5 | 0,5 | - |
| Zinkperoxid | - | 3,5 | 4,5 | 5 |
| TMTD²⁾ | 2 | 2 | 2 | 2 |
| CBS⁴⁾ | 0,5 | 0,5 | 0,5 | 0,5 |
| Mooney (ML 1+4) [ME] | 113 | 108 | 108 | 105 |

| | | | | |
|---|---|---|---|---|
| 2) Tetramethylthiuramdisulfid | | | | |
| 4) Benzthiazyl-2-cyclohexylsulfenamid | | | | |

Die obigen Mischungen wurden 15 Minuten bei 170°C vulkanisiert und 7 Stunden bei 150°C getempert. Die erhaltenen Produkte wiesen folgende Eigenschaften auf:

| | | C | D | E | F |
|---|---|---|---|---|---|
| Druckverformungsrest [%] | | | | | |
| nach 70 Stunden/100°C | | 52 | 32 | 31 | 32 |
| nach 70 Stunden/125°C | | 78 | 57 | 59 | 59 |

| Spannungsrelaxation [%] (DIN 53 537/125°C) | | | | | |
|---|---|---|---|---|---|
| nach | 24 Stunden | 35 | 24 | 23 | 25 |
| | 72 Stunden | 49 | 40 | 37 | 40 |
| | 168 Stunden | 62 | 51 | 48 | 52 |

| Beispiel 3 | | | | |
|---|---|---|---|---|
| | G | H | I | K |
| | **[Teile]** | | | |
| HNBR | 90 | 90 | 100 | 100 |
| Polycycooctadien⁵⁾ | 10 | 10 | - | - |
| Ruß N 550 | 45 | 45 | 45 | 45 |
| Schwefel | 0,5 | 0,5 | 0,5 | 0,5 |
| Zinkoxid | 5 | - | 5 | - |
| Zinkperoxid | - | 5 | - | 5 |
| Stearinsäure | 1 | 1 | 1 | 1 |
| Styrolisiertes Diphenylamin | 1,5 | 1,5 | 1,5 | 1,5 |
| Zinksalz des Mercaptobenzimidazols | 2 | 2 | 2 | 2 |
| Etherthioether | 5 | 5 | 5 | 5 |
| TMTD²⁾ | 2 | 2 | 2 | 2 |
| CBS⁴⁾ | 0,5 | 0,5 | 0,5 | 0,5 |
| Mooney (ML 1+4) [ME] | 87 | 82 | 94 | 91 |

| | | | | |
|---|---|---|---|---|
| 2) Tetramethylthiuramdisulfid | | | | |
| 4) Benzthiazyl-2-cyclohexylsulfenamid | | | | |
| 5) trans-Gehalt 80 %, Viskosität einer 0,1 %igen Lösung in Toluol (0,4 mm-Kapillare/25°C): 120 ml/g | | | | |

Die Vulkanisation erfolgte 15 Minuten bei 170°C.

| | G | H | I | K |
|---|---|---|---|---|
| Druckverformungsrest [%] | | | | |
| nach 70 Stunden/25°C | 18 | 13 | 13 | 10 |
| nach 70 Stunden/100°C | 68 | 51 | 67 | 53 |

| Flexometer-Test⁶⁾ bei 100°C | | | | |
|---|---|---|---|---|
| ΔT [°C] | | 34 | 37 | 30 |
| Fließen [%] | | 1,3 | 7,1 | 1,7 |
| bleibende Verformung [%] | | 3,9 | 9,0 | 3,5 |

| | | | | |
|---|---|---|---|---|
| 6) im Flexometer nach DIN 53 533, Mittelspannung 1 MPa, Hub 4,45 mm, Frequenz 30 Hz, Laufzeit 25 Minuten | | | | |

| Beispiel 4 (Reifenlaufflächen-Mischung) | | | | |
|---|---|---|---|---|
| | L | M | N | O |
| | **[Teile]** | | | |
| SBR 1⁷⁾ | - | - | 103 | 103 |
| SBR 2⁸⁾ | 100 | 100 | - | - |
| BR⁹⁾ | - | - | 25 | 25 |
| Ruß N 339 | 70 | 70 | 70 | 70 |
| Mineralöl | 40 | 40 | 2,5 | 2,5 |
| Schwefel | 1,8 | 1,8 | 1,8 | 1,8 |
| Stearinsäure | 1 | 1 | 1 | 1 |
| N-Isopropyl-N-phenyl-p-phenylendiamin | 1,5 | 1,5 | 1,5 | 1,5 |
| Zinkoxid | 5 | - | 5 | - |
| Zinkperoxid | - | 5 | - | 5 |
| CBS⁴⁾ | 1,5 | 1,5 | 1,5 | 1,5 |
| TMTM¹⁰) | - | - | 0,2 | 0,2 |

| | | | | |
|---|---|---|---|---|
| 4) Benzthiazyl-2-cyclohexylsulfenamid | | | | |
| 7) Styrol/Butadien-Copolymerisat mit 23,5 % Styrolgehalt, mit 27,5 % Öl gestreckt, Mooney (ML 1+4): 49 ME | | | | |
| 8) wie 7), nicht ölgestreckt, 50 ME | | | | |
| 9) Polybutadien (96 % cis-Gehalt), Mooney (ML 1+4): 47 ME | | | | |
| 10) Tetramethylenthiurammonosulfid | | | | |

Die Vulkanisation erfolgte 15 Minuten bei 170°C (Normring I). Man erhielt folgende Ergebnisse:

| | L | M | N | O |
|---|---|---|---|---|
| Druckverformungsrest [%] | | | | |
| nach 70 Stunden/25°C | 12,9 | 8,8 | 9,9 | 9,3 |

| Flexometer-Test⁶⁾ bei 80°C | | | | |
|---|---|---|---|---|
| ΔT [°C] | 51 | 36,4 | 28,3 | 26,2 |
| Fließen [%] | 13,5 | 10,2 | 3,4 | 3,6 |
| bleibende Verformung [%] | 19,8 | 15,6 | 5,5 | 5,5 |

| | | | | |
|---|---|---|---|---|
| 6) im Flexometer nach DIN 53 533, Mittelspannung 1MPa, Hub 4,45 mm, Frequenz 30 Hz, Laufzeit 25 Minuten | | | | |

| Beispiel 5 | | | |
|---|---|---|---|
| | P (Vergleich) | Q | R |
| NBR¹¹⁾ | 100 | 100 | 100 |
| Aromatischer Polyether | 5 | 5 | 5 |
| Schwefel | 0,3 | 0,3 | 0,3 |
| Zinkoxid | 4 | - | 0,5 |
| Zinkperoxid | - | 5,2 | 4,5 |
| Ruß | 55 | 55 | 55 |
| Stearinsäure | 0,7 | 0,7 | 0,7 |
| Etherthioether | 8 | 8 | 8 |
| Zinksalz des 4- bzw. 5-Methyl-mercaptobenzimidazols | 2,5 | 2,5 | 2,5 |
| Styrolisiertes Diphenylamin | 1 | 1 | 1 |
| Poly-2,2,4-trimethyl-1,2-dihydrochinolin | 1 | 1 | 1 |
| TMTD¹⁾ | 1,5 | 1,5 | 1,5 |
| TETD³⁾ | 1,5 | 1,5 | 1,5 |
| Dibenzthiazyldisulfid | 2 | 2 | 2 |
| N-Cyclohexylthiophthalimid | 0,2 | 0,2 | 0,2 |
| Mooney (ML 1+4) [ME] | 63 | 60 | 60 |

| | | | |
|---|---|---|---|
| 1) Hydriertes Acrylnitril/Butadien-Copolymerisat mit einem Acrylnitrilgehalt von 34 %, einem Hydrierungsgrad von 96 %, bezogen auf C=C-Doppelbindungen, und einer Mooney-Viskosität (ML 1+4) von 70 ME | | | |
| 3) Tetraethylthiuramdisulfid | | | |
| 11) Acrylitril/Butadien-Copolymerisat mit einem Acrylnitrilgehalt von 28 % und einer Mooney-Plastizität (ML 1+4) von 45 ME | | | |

Die Mischungen wurden 15 Minuten bei 170°C vulkanisiert und 2 Stunden bei 150°C getempert. Man erhielt folgende Eigenschaften:

| | P | Q | R |
|---|---|---|---|
| Druckverformungsrest [%] | | | |
| nach 168 Stunden/100°C | 36,4 | 35,0 | 33,8 |

| Flexometer-Test¹²⁾ bei 100°C | | | |
|---|---|---|---|
| ΔT [°C] | | 43,1 | 42,3 |
| Fließen [%] | | 0,5 | 0,25 |
| bleibende Verformung [%] | | 2,8 | 2,8 |

| | | | |
|---|---|---|---|
| 12) im Flexometer nach DIN 53 533, Mittelspannung 1 Mpa, Hub 5,71 mm, Frequenz 30 Hz, Laufzeit 25 Minuten | | | |

## Patentansprüche

1. Vulkanisierbare Kautschukmassen, die frei von Carboxylgruppen sind und Polychloroprene, EPDM, Ethyler/Vinylacetat-Copolymerisate, Polybutadiene, Styrol/Butadien-Copolymerisate, Acrylnitril/-Butadien-Copolymerisate sowie deren partielle Hydrierprodukte umfassen, dadurch gekennzeichnet, daß man die genannten Kautschuke mit Zusätzen mischt, die neben Schwefel und/ oder Schwefelspendern 0,1 bis 20 Gew.-% Peroxid mindestens eines Metalls aus den Gruppen Ia, Ib, IIa, IIb des Periodensystems der Elemente enthalten.

2. Vulkanisierbare Kautschukmassen nach Anspruch 1, dadurch gekennzeichnet, daß sie durch Zumischen von 1 bis 5 Gew.-% dieses Peroxids erhalten werden.

3. Vulkanisierbare Kautschukmassen nach Anspruch 1, dadurch gekennzeichnet, daß sie durch Zumischen von Zinkperoxid erhalten werden.

4. Verwendung der Kautschukmassen nach Anspruch 1 zur Herstellung von Vulkanisaten.

## Claims

1. Vulcanisable rubber compounds containing no carboxyl groups and comprising polychloroprenes, EPDM, ethylene/vinyl acetate copolymers, polybutadienes, styrene/butadiene copolymers, acrylonitrile/butadiene copolymers together with the partial hydrogenation products thereof, characterised in that the stated rubbers are blended with additives containing, as well as sulphur and/or sulphur donors, 0.1 to 20 wt.% of a peroxide of at least one metal from groups Ia, Ib, IIa, IIb of the periodic system of elements.

2. Vulcanisable rubber compounds according to claim 1, characterised in that they are obtained by incorporation of 1 to 5 wt.% of this peroxide.

3. Vulcanisable rubber compounds according to claim 1, characterised in that they are obtained by incorporation of zinc peroxide.

4. Use of the rubber compounds according to Claim 1 for the production of vulcanisates.

## Revendications

1. Compositions de caoutchoucs vulcanisables, gui sont dépourvues de groupes carboxyle et gui comprennent des polychloroprènes, des EPDM, des copolymères éthylène/acétate de vinyle, des polybutadiènes, des copolymères styrène/butadiène, des copolymères acrylonitrile/butadiène ainsi que leurs produits d'hydrogénation partielle, caractérisées en ce gu'on mélange les caoutchoucs mentionnés avec des additifs gui contiennent, à côté de soufre et/ou de donneurs de soufre, 0,1 à 20 % en poids de péroxyde d'au moins un métal des groupes Ia, Ib, IIa, IIb du Système Périodique des éléments.

2. Compositions de caoutchoucs vulcanisables suivant la revendication 1, caractérisées en ce qu'elles sont obtenues par mélange de 1 à 5 % en poids de ce peroxyde.

3. Compositions de caoutchoucs vulcanisables suivant la revendication 1, caractérisées en ce qu'elles sont obtenues par mélange de peroxyde de zinc.

4. Utilisation des compositions de caoutchoucs suivant la revendication 1 pour la production de vulcanisats.
